# EUROPEAN PATENT SPECIFICATION

(11) **EP 2 615 708 B1**
(45) Date of publication and mention of the grant of the patent: **16.09.2015**
(21) Application number: 12195965.4
(22) Date of filing: 06.12.2012
(51) Int. Cl.: H02G 3/12

(54) **Installation box**
Installationsdose
Boîte d'installation

(30) Priority: 11.01.2012 NL 2008102
(43) Date of publication of application: 17.07.2013
(73) Proprietor: ABB B.V., 6716 AA Ede (NL)
(72) Inventor: Renckens, Thomas Philippus, 3742 ND Baarn (NL)
(74) Representative: Geurts, Franciscus Antonius

(56) References cited:
- DE-A1- 2 316 813
- DE-A1- 2 910 836
- DE-A1- 3 612 291
- DE-B- 1 004 261

## Description

### BACKGROUND OF THE INVENTION

The invention relates to an installation box. The installation box forms a part of electric wiring of a building.

A known installation box to be placed in a hole in a wall of a building comprises a bottom wall and a circumferential wall that is upright from the bottom wall. The bottom wall and the circumferential wall jointly define an installation space for installation material such as flush sockets and switches. The circumferential wall has a circular circumferential edge facing away from the bottom wall and bounding a primary opening of the installation box. The installation material comprises a mounting plate resting on the front of the wall and being coupled to the circumferential edge by means of screws. The installation box is generally placed such that the circumferential edge is flush with the front of the unfinished wall. If the wall is given a finish afterwards for instance by means of a layer of plaster, it may happen that the circumferential edge comes to sit recessed to such an extent that it sits out of engagement of the screws of the mounting plate. The mounting plate thus cannot be properly attached to the installation box if at all.

DE 36 122 91 discloses an installation box according to the preamble of claim 1.

It is an object of the invention to provide an installation box with which it can be counteracted that an installation box that sits recessed is situated beyond the reach of the installation material.

### SUMMARY OF THE INVENTION

The invention provides an installation box according to claim. By rotating the ring the distance over which the ring projects with respect to the housing can be set accurately. The ring can be set such that after applying a finishing layer on the wall the second circumferential edge is substantially flush with the front of the finished wall.

Without the presence of the first blocking surface the ring could be rotated further in the second direction of rotation, resulting in the ring being moved further upwards until the guide edges get out of each other's engagement and the ring is no longer attached to the housing. The ring getting detached is undesirable as the position of the ring with respect to the housing is then undefined. The first blocking surface can counteract that the ring rotates too far in the second direction of rotation.

In one embodiment the housing is provided with one or more first guide elements that extend in the circumferential direction of the circumferential wall along the inside of the circumferential wall and that jointly define a first helical guide edge, wherein the ring is provided with one or more second guide elements that extend in the circumferential direction of the ring body along the outside of the ring body and jointly define a second helical guide edge shaped complementary to the first guide edge, wherein via the helical path the second guide edge of the ring engages onto the first guide edge of the housing in order to form the helical transmission in cooperation. The guide edges are capable of firmly connecting the ring and housing to each other so that the position of the ring with respect to the housing can be set reliably.

In one embodiment considered parallel to the centre line the distance between the first position and the second position of the ring is at least five millimetres, preferably at least eight millimetres and most preferably approximately ten millimetres. In that way the ring can be set within a range of approximately ten millimetres so that after applying a finishing layer on the wall the second circumferential edge is substantially flush with the front of the finished wall.

In one embodiment on the inside of the circumferential wall the housing is provided with first ratchet cams, wherein on the outside of the ring body the ring is provided with second ratchet cams, wherein the first ratchet cams and the second ratchet cams contact each other at rotation of the ring, wherein considered in both directions of rotation the ratchet cams are provided with slide surfaces, wherein the ratchet cams are adapted for at the location of the slide surfaces being able to slide over each other in both directions of rotation. The ratchet cams are able to cooperate for in multiple rotation positions of the ring with respect to the housing providing a resistance against further rotation of the ring which resistance can be overcome.

In one embodiment the slide surfaces are at an angle as a result of which the forces exerted by the ratchet cams on each other in the directions of rotation generate reaction forces the components of which in the radial direction of the helical path are larger than the components in the tangential direction of the helical path. Preferably the slide surfaces are at an angle to the helical path in the range of ten to forty degrees. Most preferably the normal vectors of the slide surfaces with respect to the tangent line with the helical path are at an angle in the range of fifty to eighty degrees. The angles and the related radial reaction forces cause the ratchet cams to deflect with respect to each other, as a result of which the ratchet cams are able to slide over each other. When sufficient force is exerted on the ring in one of the directions of rotation the resistance between the ratchet cams can be overcome and the ring can be rotated further.

In one embodiment the smallest intermediate distance between two successive second ratchet cams is larger, preferably at least five times larger than the smallest intermediate distance between two successive first ratchet cams. The number of second ratchet cams that is simultaneously in contact with the first ratchet cams can thus remain limited as a result of which the resistance generated by the mutual contact is smaller and therefore can be overcome.

In one embodiment, at the location of the abutment with the ring, the first blocking surface is at an angle as a result of which a force the ring exerts on the first blocking surface in the second direction of rotation at the location of the abutment, generates a reaction force of the first blocking surface on the ring, the component of which in the tangential direction of the helical path is larger than the component in the radial direction of the helical path. Preferably, at the location of the abutment with the ring, the first blocking surface is at an angle to the helical path in the range of fifty to ninety degrees. Most preferably, at the location of the abutment with the ring with respect to the tangent line with the helical path, the normal vector of the first blocking surface is at an angle in the range of zero to forty degrees. Due to the angle the related reaction forces that arise between the first blocking surface and the ring are oriented substantially in the direction of the helical path, as a result of which a further rotation of the ring in the second direction of rotation with respect to the housing can be counteracted.

In one embodiment, at the location of its abutment with the ring, the first blocking surface extends perpendicular to the second direction of rotation. Due to the perpendicular angle of the first blocking surface, substantially all forces arising between the first blocking surface and the ring are oriented in the direction of the helical path, as a result of which further rotation of the ring in the second direction of rotation with respect to the housing can be counteracted.

In one embodiment, at the location of the blocking cam, the housing is provided with a circumferential wall section which with respect to the rest of the circumferential wall is able to move outward. Due to the outward movement of the circumferential wall the blocking cam disposed thereon is able to deflect slightly outward. The deflection may be necessary when the ring has not yet been disposed in the housing. The blocking cam could in such a situation hinder bringing the ring into engagement with the housing, as the blocking cam would not allow the ring being inserted in the housing in the first direction of rotation. Due to the deflection of the blocking cam the ring is able to slide along the blocking cam in the first direction of rotation until the second guide edge of the ring as a result of the displacement in the downward direction has moved to below the blocking cam and is in engagement with the housing. Subsequently the blocking cam returns to the original position, in which the blocking cam is able to counteract the rotation of the ring in the second direction of rotation.

In one embodiment the circumferential wall section is connected to the rest of the circumferential wall via bending connections, wherein the bending connections are flexible. The bending connections can allow the outward movement of the circumferential wall section.

In one embodiment on the side facing away from the first blocking surface, the blocking cam is provided with a run-on surface, wherein the run-on surface is at an angle as a result of which a force the ring exerts on the run-on surface in the first direction of rotation, generates a reaction force, the component of which in the radial direction of the helical path is larger than the component in the tangential direction of the helical path. The radially oriented reaction force may cause the circumferential wall section to be moved outward, as a result of which the blocking cam deflects with respect to the ring.

In one embodiment the ring is provided with a second blocking surface that - when the ring is in the high position - abuts the first blocking surface in the direction of the second direction of rotation and blocks the ring with respect to the first blocking surface against further rotation in the second direction of rotation. The abutment between the first blocking surface and the second blocking surface is able to counteract further rotation of the ring with respect to the housing in the second direction of rotation.

In one embodiment, at the location of the abutment with the first blocking surface, the second blocking surface is at an angle as a result of which a force the first blocking surface exerts on the second blocking surface in the first direction of rotation at the location of the abutment, generates a reaction force of the second blocking surface on the first blocking surface, the component of which in the tangential direction of the helical path is larger than the component in the radial direction of the helical path. Preferably, at the location of the abutment with the first blocking surface, the second blocking surface is at an angle to the helical path in the range of fifty to ninety degrees. Most preferably, at the location of the abutment with the first blocking surface with respect to the tangent line with the helical path, the normal vector of the second blocking surface is at an angle in the range of zero to forty degrees. Due to the angle the related reaction forces arising between the first blocking surface and the second blocking surface are substantially oriented in the direction of the helical path, as a result of which a further rotation of the ring in the second direction of rotation with respect to the housing can be counteracted.

In one embodiment the second blocking surface extends substantially parallel to the first blocking surface. As a result the blocking surfaces can abut flat against each other, as a result of which a firm abutment is realised.

In one embodiment, in the high position considered in the circumferential direction, via the helical transmission, the ring engages onto the inside of the circumferential wall on at least three locations that are evenly divided over a full revolution. Due to the engagement even in the high position of the ring the position of the ring can reliably be set with respect to the housing. The three locations are able to provide a stable connection between the ring and the housing.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows an isometric view of an installation box with ring according to a first embodiment of the invention;
figure 2 shows a view of the installation box according to figure 1 with the ring in the highest position;
figure 3 shows an isometric view of the installation box according to figure 1 in exploded condition;
figure 4 shows a detail of the installation box according to circle IV in figure 3;
figure 5 shows a detail of the installation box according to circle V in figure 3; and
figure 6 shows a detail of the installation box according to circle VI in figure 2.

### DETAILED DESCRIPTION OF THE DRAWINGS

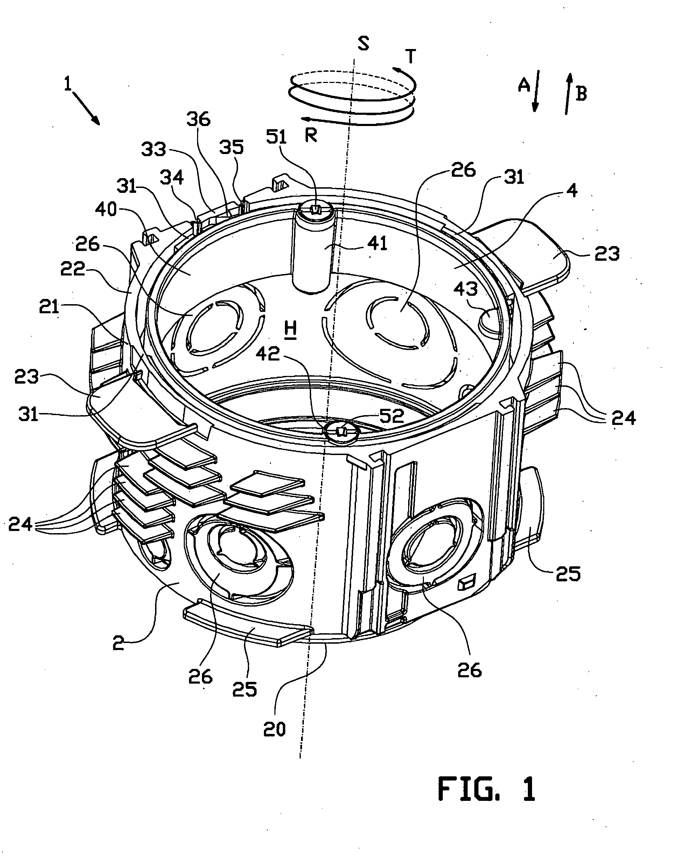

Figures 1, 2 and 3 show an installation box 1 for electric wiring according to an embodiment of the invention. The installation box 1 comprises a housing 2 and a ring 4 that is adjustable with respect to the housing 2. Via a helical transmission the ring 4 is coupled to the housing 2 and is able to move with respect to the housing 2 according to a first helical path C clockwise in a first direction of rotation R and anticlockwise in a second direction of rotation T, wherein the ring 4 is displaced with respect to the housing 2 in a downward direction A or an upward direction B, respectively. The housing 2 and the ring 4 have been manufactured by means of injection moulding a suitable synthetic material, for instance polypropylene. The installation box 1 is adapted for being placed as a part of electric wiring in a hole that is not shown in a wall of a building. The installation box 1 offers room to fitting installation material such as flush sockets or switches.

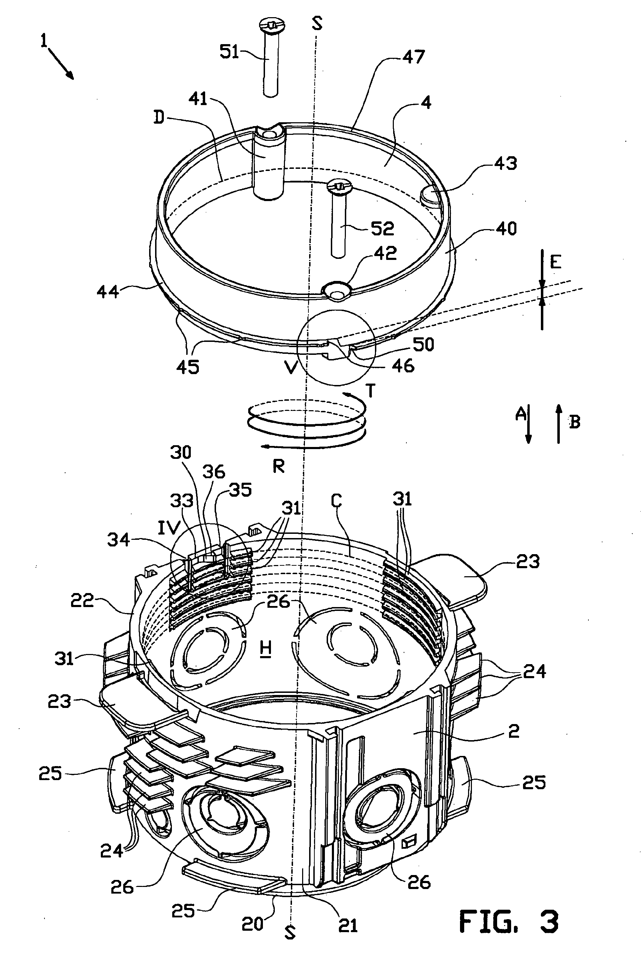

As shown in figure 3 the housing 2 is provided with a bottom wall 20 and a substantially cylindrical circumferential wall 21 that is upright from the bottom wall 20 and has a centre line S. The bottom wall 20 and the circumferential wall 21 define an installation space H for accommodation of the said electric installation material. The circumferential wall 21 has a circular first circumferential edge 22 that faces away from the bottom wall 20 and bounds a primary opening of the housing 2.

Around the circumferential wall 21, the housing 2 is provided with integrally formed groups of positioning protrusions 23, placement protrusions 24 and alignment protrusions 25 in the form of ribs, strips or flaps. The groups of protrusions 23-25 are divided into groups and extend radially outward from the outer surface of the circumferential wall 21 that is oriented away from the installation space H. The protrusions 23-25 are slightly flexible and are adapted for getting into contact with or engaging onto the hole in the wall in order to position, secure and/or align the installation box 1 in there.

As shown in figure 3 at the location of the circumferential wall 21 the housing 2 is provided with several break-through surfaces 26 distributed around the circumference, which surfaces can be broken through by an electrician in order to be able to insert installation pipes or cables that are not shown into the housing 2 and have them end in installation space H of the housing 2.

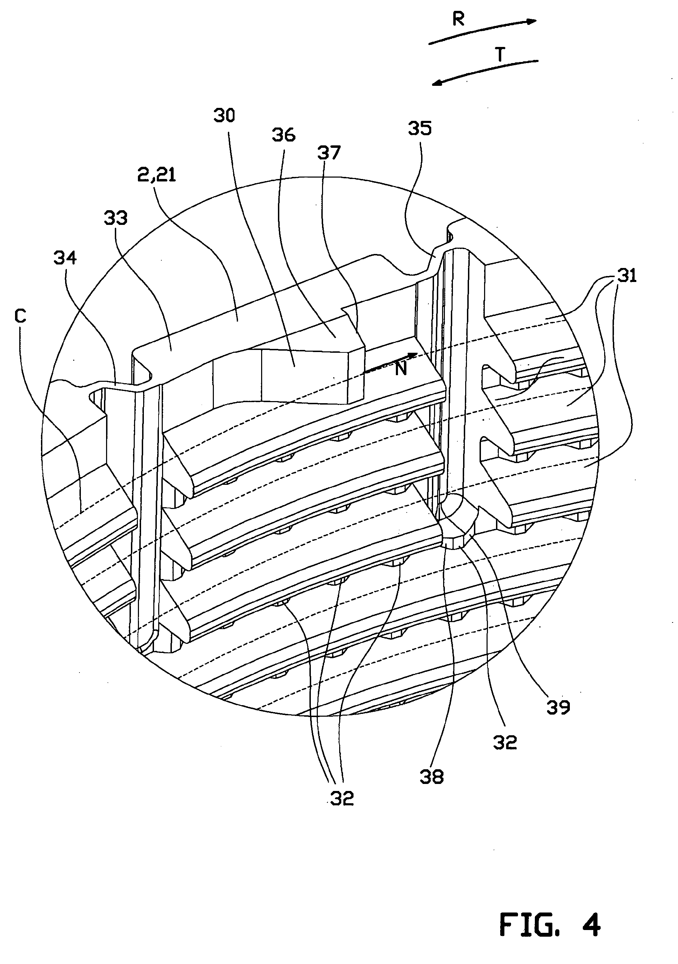

The housing 2 is provided with a multiple of first guide elements in the form of guide ribs 31 that according to a helical path C extend in the circumferential direction of the circumferential wall 21 along the inside of the circumferential wall 21. In this example the guide ribs 31 are divided group-wise into four sectors, as a result of which a first interrupted helical guide edge is being formed. In an alternative embodiment that is not shown the guide ribs may however also be fully circular or be disposed in another configuration along the first helical path C. As shown in figure 4 between the guide ribs 31 the housing is provided with first ratchet cams 32 which per sector of guide ribs 31 successively have the same intermediate distance each time. In the first helical path C the first ratchet cams 32 have been provided with slide surfaces 38, 39, the normal vectors of which with respect to the tangent line of the first helical path C at the location of the slide surfaces 38, 39 are at an angle in range of fifty to eighty degrees.

The housing 2 is provided with a blocking cam 36 that is arranged in the upper revolution of the first helical path C at the location of the first circumferential edge 22 above one of the highest guide ribs 31. The blocking cam 36 comprises a first blocking surface 37 which is oriented in the first direction of rotation R and an inclined first run-on surface 30 which is oriented in the second direction of rotation T. The first blocking surface 37 has a normal vector N that is upright from the first blocking surface 37 and which with respect to the tangent line of the first helical path C at the location of the first blocking surface 37 is at an angle of zero to forty degrees. In this example the first blocking surface 37 extends substantially perpendicular to the first helical path C. The first run-on surface 30 has a normal vector that is upright from the run-on surface 30 and which with respect to the tangent line of the first helical path C at the location of the first run-on surface 30 is at an angle of fifty to eighty degrees.

At the location of the blocking cam 36 the housing 2 is provided with a first flexible bending connection 34 and a second flexible bending connection 35 which define a circumferential wall section 33 in the circumferential wall 21. Due to the bending connections 33, 34 the circumferential wall section 33 can be pushed away outward, as a result of which the blocking cam 36 is able to slightly deflect outward with respect to the first helical path C.

As shown in figure 4 the ring 4 is provided with a cylindrical ring body 40 that fits concentrically within the circumferential wall 21 of the housing 2. The ring 4 has a circular second circumferential edge 47 the height of which with respect to the first circumferential edge 22 can be adjusted by rotation in the direction of rotation R, T. The ring 4 is provided with a first bush 41 and a second bush 42 that extend parallel to the centre line S of the housing 2 and that are integrally formed with the ring body 40 at positions that are situated diametrically across each other. The bushes 41, 42 are threaded for accommodation of bolts or screws 51, 52, for attaching installation material that is not further shown. Alternatively the bushes 41, 42 are provided with a cavity for forming thread with threading bolts or screws.

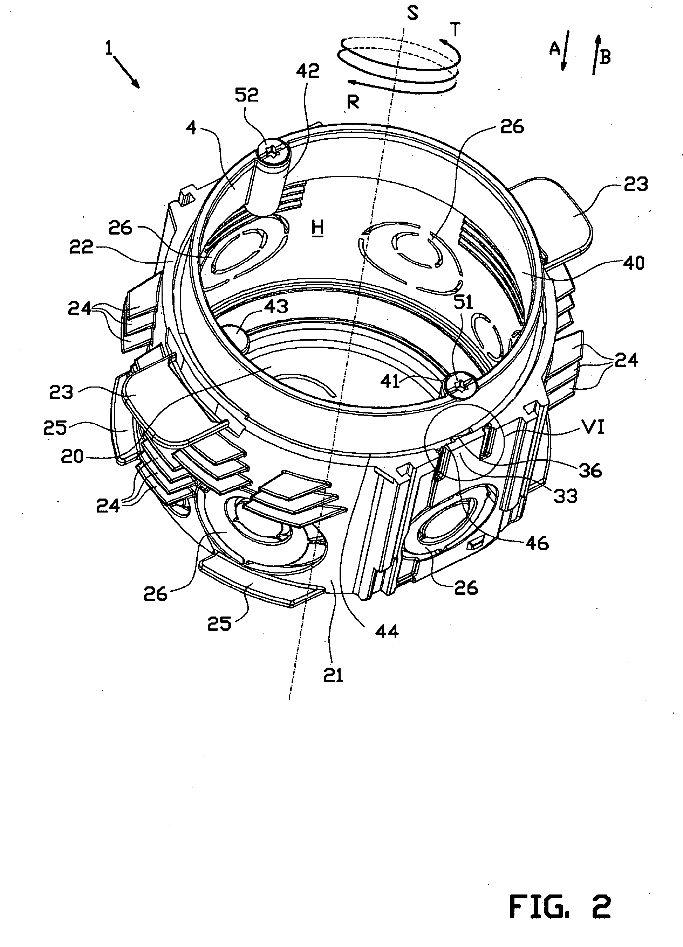

The ring 4 is provided with a second guide element in the form of a circular second guide edge 44 extending in the circumferential direction of the ring body 40 according to a second helical path D along the outside of the ring body 40. The second guide edge 4 has a pitch E. The second helical path D is shaped complementary to the first helical path C defined by the guide ribs 31. In the situation as shown in figures 1 and 2 the ring 4 is arranged in the housing 2, wherein - hidden from view - the second guide edge 44 cooperates with the guide ribs 31 in order for cooperatively effecting the helical transmission between second helical path D of the ring 4 and the first helical path C of the housing 2.

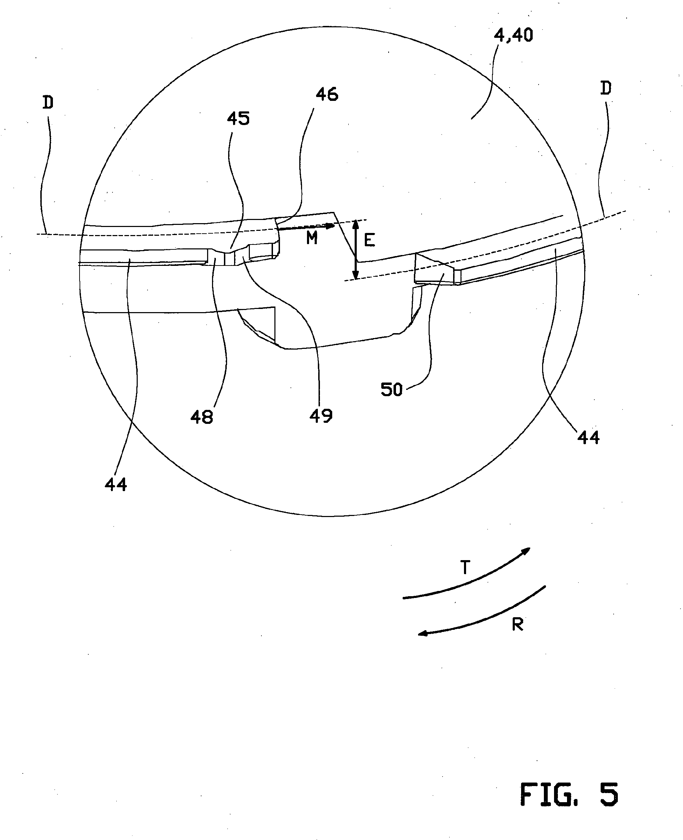

As shown in figure 3 the ring 4 is provided with second ratchet cams 45 evenly distributed around the outer circumference of the second guide edge 44. Figure 5 shows that in the second helical path D the second ratchet cams 45 are provided with slide surfaces 48, 49 the normal vectors of which with respect to the tangent line of the second helical path D at the location of the slide surfaces are at an angle in the range of fifty to eighty degrees. In the situation according to figures 1 and 2 the second ratchet cams 45 - hidden from view - contact the first ratchet cams 32 at further rotation in the first direction of rotation R or the second direction of rotation T.

The smallest intermediate distance between two successive second ratchet cams 45 is considerably larger, preferably at least five times larger than the smallest intermediate distance between two successive first ratchet cams 32 within a sector of the guide ribs 31. As a result there are fewer second ratchet cams 45 than there are first ratchet cams 32, and at a distance of five first ratchet cams 32 there is only one second ratchet cam 45. The first ratchet cams 32 provide the possibility of a step-wise adjustment of the ring 4. The number of second ratchet cams 45 simultaneously contacting the first ratchet cams 32 remains limited, as a result of which the resistance generated by the mutual contact is smaller and therefore can be overcome. Due to the angles the largest components of the reaction forces arising between the slide surfaces 38, 39, 48, 49 are oriented substantially transverse to or radially with respect to the helical paths C, D. When sufficient force is exerted on the ring 4, the ring 4 and/or the housing 2 will deform as a result of which the slide surfaces 38, 39, 48, 49 slide over each other. The ratchet cams 32, 45 cooperate in this way for independent from the distribution of the second ratchet cams 45 around the second guide edge 44 in case of a multiple of rotation positions of the ring 4 with respect to the housing 2 providing a resistance that can be overcome against further rotation of the ring 4.

As shown in figure 5 at the end of the second guide edge 44 oriented in the second direction of rotation T, the ring 4 is provided with a second blocking surface 46 that is oriented in the second direction of rotation T. At the location of the second blocking surface 46, the normal vector M of the second blocking surface 46 with respect to the tangent line of the second helical path D is at an angle G of zero to forty degrees. In this example the second blocking surface 46 extends substantially perpendicular to the second helical path D. At the opposite end of the second guide edge 44 the ring 4 is provided with a second run-on surface 50 that is oriented in the first direction of rotation R. The second run-on surface 50 has a normal vector that is upright from the second run-on surface 50 and that with respect to the tangent line of the second helical path D at the location of the second run-on surface 50 is at an angle of fifty to eighty degrees.

The operation of the installation box 1 described above will be further elucidated below in the basis of figures 1, 2 and 6.

Figure 3 shows the situation in which the ring 4 is out of engagement of the housing 2. In order to bring the ring 4 into engagement with the housing 2 the ring 4 should be rotated in the first direction of rotation R in the housing 2, wherein the second guide edge 44 will engage onto the guide ribs 31. The second run-on surface 50 of the ring 4 oriented in the first direction of rotation R will however rather quickly contact the first run-on surface 30 of the blocking cam 36 which is situated in the upper revolution of the first helical path C. As a result further rotation of the ring 4 in the first direction of rotation R is impeded.

Sufficient force in the first direction of rotation R on the ring 4 generates a reaction force the component of which in the radial direction of the first helical path C is larger than in the tangential direction of the first helical path C. The radially oriented reaction force causes the circumferential section 33 being moved outward, as a result of which the first run-on surface 30 deflects with respect to the second run-on surface 50. Subsequently during one revolution of the ring 4 the second guide edge 44 is able to slide over the deflected first run-on surface 40. The pitch E of the second guide edge 44 of the ring 4 converts the rotation in the first direction of rotation R per full revolution in the first direction of rotation R into a displacement of the ring 4 in the downward direction A oriented towards the bottom 20 over a distance with pitch E. As soon as the ring 4 has been moved sufficiently in the downward direction A to be free from the blocking cam 36, the blocking cam 36 returns to its original, undeflected position. The ring 4 is now in engagement with the housing 2 and is ready for use.

Figure 1 shows the situation in which the ring 4 is in a low, first position. The ring 4 has been moved into this first position by rotating the ring 4 from a position between the first position and a second position to be further described over several revolutions in the first direction of rotation R, wherein the pitch E as described above causes a displacement of the ring 4 in the downward direction A. In the first position the ring 4 is situated substantially within the cavity H of the housing 2, wherein the second circumferential edge 47 sits substantially in the same plane as the first circumferential edge 22.

Figure 2 shows the situation in which the ring 4 is in a high, second position. The ring 4 is moved into this second position by rotating the ring 4 from a position between the first position and the second position over several revolutions in the second direction of rotation T. The pitch E of the second guide edge 44 converts the rotation in the second direction of rotation T per full revolution into a displacement of the ring 4 in upward direction B, oriented away from the bottom 20 over a distance with pitch E. In the second position the ring 4 projects with respect to the circumferential wall 21 from the housing 2, such that the distance parallel to the centre line S between the second circumferential wall 47 and the first circumferential wall 22 is approximately ten millimetres. By rotating the ring 4 the distance over which the ring 4 projects with respect to the housing 2 can be set accurately in a range of in this example zero to ten millimetres. The ring 4 can be adjusted such that after applying a finishing layer on the wall the second circumferential edge 47 is substantially flush with the front of the finished wall.

The second guide edge 44 of the ring 4 in its second position is still at least partially in engagement with the housing 2, preferably at the location of three or more guide ribs 31 of the housing 2 that are evenly distributed over the circumferential wall 21. At further rotation in the second direction of rotation T the ring 4 would move further in the upward direction B, until the engagement between the second guide edge 44 of the ring 4 and the guide ribs 31 of the housing 2 is ended and there are two individual elements; the housing 2 and the ring 4. Ending the engagement between the second guide edge 44 of the ring 4 and the guide ribs 31 of the housing 2 as a result of rotating the ring 4 too far into the second direction of rotation T is undesirable as the ring 4 is adapted for performing its function in cooperation with the housing 2. The blocking surfaces 37, 46 counteract rotating the ring 4 too far in the second direction of rotation T in the manner described below.

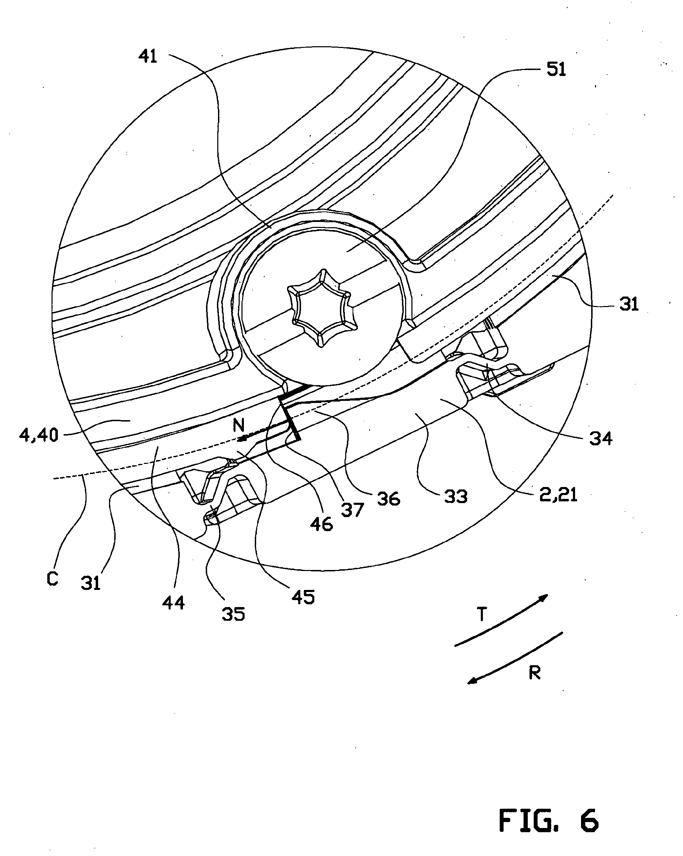

As shown in detail in figure 6, in the direction of the first direction of rotation R, the first blocking surface 37 of the blocking cam 36 has contacted the second blocking surface 46 of the ring 4 and - considered from the opposite direction - in the direction of the second direction of rotation T, the second blocking surface 46 of the ring 4 has contacted the first blocking surface 37 of the blocking cam 36. The angles F, G of the blocking surfaces 37, 46 cause the component of the reaction force arising between the blocking surfaces 37, 46 in the tangential direction of the first helical path C being larger than in the radial direction of the first helical path C. As a result a further rotation of the ring 4 in the second direction of rotation T with respect to the housing 2 is counteracted. The abutting contact between the blocking surfaces 37, 46 therefore provides a blocking of the rotation of the ring 4 with respect to the housing 2 in the second direction of rotation T, prior to the second guide edge 44 getting beyond engagement reach of the guide ribs 31.

The above description is included to illustrate the operation of preferred embodiments of the invention and not to limit the scope of the invention. Starting from the above explanation many variations that fall within the scope of the present invention will be evident to an expert.

## Claims

1. Installation box (1) for electric wiring, comprising a housing (2) and a ring (4) that is adjustable with respect to the housing, wherein the housing is provided with a bottom wall (21) and a cylindrical circumferential wall (21) that is upright from the bottom wall and has a centre line (S), wherein the bottom wall and the circumferential wall jointly define an inner space for accommodating installation material, wherein the circumferential wall comprises a circular circumferential edge (22) that faces away from the bottom wall and bounds a primary opening of the housing, wherein the ring (4) is provided with a circular ring body (40) that is situated concentrically within the circumferential wall in the opening of the housing, wherein the ring (4) via a helical transmission (31, 44) along a helical path (C) engages onto the inside of the circumferential wall (21), wherein with respect to the housing the ring can be rotated about the centre line (S) of the circumferential wall in a first direction of rotation and a second, opposite direction of rotation, wherein the helical transmission (31, 44) is adapted for per revolution in the first direction of rotation moving the ring parallel to the centre line in the direction of the bottom wall to a low position and wherein the helical transmission (31, 44) is adapted for per revolution of the ring in the second direction of rotation moving the ring parallel to the centre line away from the bottom wall to a high position, **characterised in that** the housing (2) is provided with a blocking cam (36) having a first blocking surface (37) that - when the ring is in the high position - abuts the ring in the direction of the first direction of rotation and blocks the ring with respect to the first blocking surface against further rotation in the second direction of rotation.

2. Installation box (1) according to claim 1, wherein at the location of the abutment with the ring (4) the first blocking surface (37) is at an angle as a result of which a force the ring exerts on the first blocking surface in the second direction of rotation at the location of the abutment, generates a reaction force of the first blocking surface on the ring, the component of which in the tangential direction of the helical path is larger than the component in the radial direction of the helical path (C).

3. Installation box (1) according to claim 1 or 2, wherein at the location of the abutment with the ring (4) the first blocking surface is at an angle to the helical path (C) in the range of fifty to ninety degrees, wherein, preferably, at the location of the abutment with the ring (4) with respect to the tangent line with the helical path (C) the normal vector of the first blocking surface is at an angle in the range of zero to forty degrees, wherein, preferably, at the location of its abutment with the ring the first blocking surface extends substantially perpendicular to the second direction of rotation.

4. Installation box (1) according to any one of the preceding claims, wherein at the location of the blocking cam (36) the housing (2) is provided with a circumferential wall section (33) which with respect to the rest of the circumferential wall (21) is able to move outward, wherein, preferably, the circumferential wall section (33) is connected to the rest of the circumferential wall via bending connections (34, 35), wherein the bending connections are flexible.

5. Installation box (1) according to claim 4, wherein on the side facing away from the first blocking surface (37) the blocking cam (36) is provided with a run-on surface (30), wherein the run-on surface is at an angle as a result of which a force the ring (4) exerts on the run-on surface in the first direction of rotation, generates a reaction force, the component of which in the radial direction of the helical path (C) is larger than the component in the tangential direction of the helical path (C).

6. Installation box (1) according to any one of the preceding claims, wherein the ring (4) is provided with a second blocking surface (46) that - when the ring is in the high position - abuts the first blocking surface (37) in the direction of the second direction of rotation and blocks the ring with respect to the first blocking surface against further rotation in the second direction of rotation, wherein, preferably, at the location of the abutment with the first blocking surfaces (37), the second blocking surface (46) is at an angle as a result of which a force the first blocking surface (37) exerts on the second blocking surface (46) in the first direction of rotation at the location of the abutment, generates a reaction force of the second blocking surface on the first blocking surface, the component of which in the tangential direction of the helical path (C) is larger than the component in the radial direction of the helical path (C).

7. Installation box (1) according to claim 6, wherein at the location of the abutment with the first blocking surface (37) the second blocking surface (46) is at an angle to the helical path (C) in the range of fifty to ninety degrees, wherein, preferably, at the location of the abutment with the first blocking surface (37) with respect to the tangent line with the helical path (C), the normal vector of the second blocking surface (46) is at an angle in the range of zero to forty degrees, wherein, preferably, the second blocking surface (46) extends substantially parallel to the first blocking surface (37).

8. Installation box (1) according to any one of the preceding claims, wherein the housing (2) is provided with one or more first guide elements (31) that extend in the circumferential direction of the circumferential wall along the inside of the circumferential wall (21) and that jointly define a first helical guide edge, wherein the ring (4) is provided with one or more second guide elements (44) that extend in the circumferential direction of the ring body (40) along the outside of the ring body and jointly define a second helical guide edge shaped complementary to the first guide edge, wherein via the helical path (C) the second guide edge of the ring engages onto the first guide edge of the housing in order to form the helical transmission (31, 44) in cooperation.

9. Installation box (1) according to any one of the preceding claims, wherein considered parallel to the centre line (S) the distance between the first position and the second position of the ring is at least five millimetres, preferably at least eight millimetres and most preferably approximately ten millimetres.

10. Installation box (1) according to any one of the preceding claims, wherein on the inside of the circumferential wall (21) the housing is provided with first ratchet cams (32), wherein on the outside of the ring body (40) the ring is provided with second ratchet cams (45), wherein the first ratchet cams (32) and the second ratchet cams (45) contact each other at rotation of the ring, wherein considered in both directions of rotation the ratchet cams are slide surfaces (38, 39, 48, 49), wherein the ratchet cams are adapted for at the location of the slide surfaces being able to slide over each other in both directions of rotation.

11. Installation box (1) according to claim 10, wherein the slide surfaces (38, 39, 48, 49) are at an angle as a result of which the forces exerted by the ratchet cams on each other in the directions of rotation generate reaction forces the components of which in the radial direction of the helical path (C) are larger than the components in the tangential direction of the helical path (C).

12. Installation box (1) according to claim 10 or 11, wherein the slide surfaces (38, 39, 48, 49) are at an angle to the helical path (C) in the range of ten to forty degrees.

13. Installation box (1) according to any one of the claims 10-12, wherein the normal vectors of the slide surfaces (38, 39, 48, 49) with respect to the tangent line with the helical path (C) are at an angle in the range of fifty to eighty degrees.

14. Installation box (1) according to any one of the claims 11-13, wherein the smallest intermediate distance between two successive second ratchet cams (45) is larger, preferably at least five times larger than the smallest intermediate distance between two successive first ratchet cams (32).

## Patentansprüche

1. Installationsdose (1) für elektrische Verdrahtung, die ein Gehäuse (2) und einen Ring (4), der in Bezug auf das Gehäuse einstellbar ist, aufweist, wobei das Gehäuse mit einer Bodenwand (20) und einer zylindrischen Umfangswand (21), die von der Bodenwand aufrecht ist und eine Mittellinie (S) hat, versehen ist, wobei die Bodenwand und die Umfangswand gemeinsam einen Innenraum zum Aufnehmen von Installationsmaterial definieren, wobei die Umfangswand einen kreisförmigen Umfangsrand (22) aufweist, der von der Bodenwand weg gewandt ist und eine primäre Öffnung des Gehäuses begrenzt, wobei der Ring (4) mit einem kreisförmigen Ringkörper (40) versehen ist, der konzentrisch innerhalb der Umfangswand in der Öffnung des Gehäuses gelegen ist, wobei der Ring (4) über ein spiralförmiges Getriebe (31, 34) entlang eines spiralförmigen Wegs (C) auf der Innenseite der Umfangswand (21) eingreift, wobei der Ring in Bezug auf das Gehäuse um die Mittellinie (S) der Umfangswand in eine erste Drehrichtung und eine zweite entgegengesetzte Drehrichtung gedreht werden kann, wobei das spiralförmige Getriebe (31, 44) geeignet ist, den Ring pro Umdrehung des Rings in der ersten Drehrichtung parallel zu der Mittellinie in die Richtung der Bodenwand in eine tiefe Position zu bewegen, und wobei das spiralförmige Getriebe (31, 44) geeignet ist, den Ring pro Umdrehung des Rings in der zweiten Drehrichtung parallel zu der Mittellinie weg von der Bodenwand in eine hohe Position zu bewegen, **dadurch gekennzeichnet, dass** das Gehäuse (2) mit einer Sperrnocke (36) mit einer ersten Sperroberfläche (37) versehen ist, die - wenn der Ring in der hohen Position ist - an dem Ring in der ersten Drehrichtung anliegt und den Ring in Bezug auf die Sperroberfläche gegen eine weitere Drehung in der zweiten Drehrichtung sperrt.

2. Installationsdose (1) nach Anspruch 1, wobei die erste Sperroberfläche (37) an der Stelle des Aufliegens an dem Ring (4) in einem Winkel ist, als ein Ergebnis dessen eine Kraft, die der Ring in der zweiten Drehrichtung an der Auflagestelle auf die erste Sperroberfläche ausübt, eine Reaktionskraft der ersten Sperroberfläche auf den Ring erzeugt, deren Komponente in der Tangentialrichtung des spiralförmigen Wegs größer als die Komponente in der Radialrichtung des spiralförmigen Wegs (C) ist.

3. Installationsdose (1) nach Anspruch 1 oder 2, wobei die erste Sperroberfläche an der Auflagestelle mit dem Ring (4) in einem Winkel zu dem spiralförmigen Weg (C) im Bereich von fünfzig bis neunzig Grad ist, wobei vorzugsweise der Normal vektor der ersten Sperroberfläche an der Auflagestelle mit dem Ring (4) in bezug auf die Tangentenlinie an den spiralförmigen Weg (C) in einem Winkel in dem Bereich von null bis vierzig Grad ist, wobei vorzugsweise die erste Sperroberfläche sich an ihrer Auflagestelle mit dem Ring im Wesentlichen senkrecht zu der zweiten Drehrichtung erstreckt.

4. Installationsdose (1) nach einem der vorhergehenden Ansprüche, wobei das Gehäuse (2) an der Stelle der Sperrnocke (36) mit einem Umfangswandabschnitt (33) versehen ist, der fähig ist, sich in Bezug auf den Rest der Umfangswand (21) auswärts zu bewegen, wobei der Umfangswandabschnitt (33) vorzugsweise über Biegeverbindungen (34, 35) mit dem Rest der Umfangwand verbunden ist, wobei die Biegeverbindungen flexibel sind.

5. Installationsdose (1) nach Anspruch 4, wobei die Sperrnocke (36) auf der Seite, die von der ersten Sperroberfläche (37) weg gewandt ist, mit einer Einlaufoberfläche (30) versehen ist, wobei ein Einlaufoberfläche in einem Winkel ist, als ein Ergebnis dessen eine Kraft, die der Ring (4) auf die Einlaufoberfläche in einer ersten Drehrichtung ausübt, eine Reaktionskraft erzeugt, deren Komponente in der Radialrichtung des spiralförmigen Wegs (C) größer als die Komponente in der Tangentialrichtung des spiralförmigen Wegs (C) ist.

6. Installationsdose (1) nach einem der vorhergehenden Ansprüche, wobei der Ring (4) mit einer zweiten Sperroberfläche (46) versehen ist, die - wenn der Ring in der hohen Position ist - in der Richtung der zweiten Drehrichtung auf der ersten Sperroberfläche (37) aufliegt und den Ring in Bezug auf die erste Sperroberfläche gegen die weitere Drehung in der zweiten Drehrichtung sperrt, wobei vorzugsweise die zweite Sperroberfläche (46) an der Stelle des Aufliegens auf der ersten Sperroberfläche (37) in einem Winkel ist, als ein Ergebnis dessen eine Kraft, die die erste Sperroberfläche (37) auf die zweite Sperroberfläche (46) an der Auflagestelle in der ersten Drehrichtung ausübt, eine Reaktionskraft der zweiten Sperroberfläche auf der ersten Sperroberfläche erzeugt, deren Komponente in der Tangentialrichtung des spiralförmigen Wegs (C) größer als die Komponente in der Radialrichtung des spiralförmigen Wegs (C) ist.

7. Installationsdose (1) nach Anspruch 6, wobei die zweite Sperroberfläche (46) an der Auflagestelle mit der ersten Sperroberfläche (37) in einem Winkel zu dem spiralförmigen Weg (C) im Bereich von fünfzig bis neunzig Grad ist, wobei vorzugsweise der Normal vektor der zweiten Sperroberfläche (46) an der Auflagestelle mit der ersten Sperroberfläche (37) in Bezug auf die Tangentenlinie an den spiralförmigen Weg (C) in einem Winkel im Bereich von null bis vierzig Grad ist, wobei vorzugsweise die zweite Sperroberfläche (46) sich im Wesentlichen parallel zu der ersten Sperroberfläche (37) erstreckt.

8. Installationsdose (1) nach einem der vorhergehenden Ansprüche, wobei das Gehäuse (2) mit einem oder mehreren ersten Führungselementen (31) versehen ist, die sich entlang der Innenseite der Umfangswand (21) in der Umfangrichtung der Umfangswand erstrecken und die gemeinsam einen ersten spiralförmigen Führungsrand definieren, wobei der Ring (4) mit einem oder mehreren zweiten Führungselementen (44) versehen ist, die sich entlang der Außenseite des Ringkörpers in der Umfangsrichtung des Ringkörpers (40) erstrecken und gemeinsam einen zweiten spiralförmigen Führungsrand definieren, der komplementär zu dem ersten Führungsrand geformt ist, wobei der zweite Führungsrand des Rings über den spiralförmigen Weg (C) auf dem ersten Führungsrand des Gehäuses eingreift, um zusammenwirkend das spiralförmige Getriebe (31, 44) auszubilden.

9. Installationsdose (1) nach einem der vorhergehenden Ansprüche, wobei der Abstand zwischen der ersten Position und der zweiten Position des Rings parallel zu der Mittellinie (S) betrachtet mindestens fünf Millimeter, vorzugsweise mindestens acht Millimeter und am besten ungefähr 10 Millimeter ist.

10. Installationsdose (1) nach einem der vorhergehenden Ansprüche, wobei das Gehäuse auf der Innenseite der Umfangswand (21) mit ersten Sperrzahnnocken (32) versehen ist, wobei der Ring auf der Außenseite des Ringkörpers (40) mit zweiten Sperrzahnnocken (45) versehen ist, wobei die ersten Sperrzahnnocken (33) und die zweiten Sperrzahnnocken (45) einander bei der Drehung des Rings berühren, wobei die Sperrzahnnocken in beiden Drehrichtungen betrachtet Gleitoberflächen (38, 39, 48, 49) sind, wobei die Sperrzahnnocken derart angepasst sind, dass sie an der Stelle der Gleitoberflächen fähig sind, in beiden Drehrichtungen übereinander zu gleiten.

11. Installationsdose (1) nach Anspruch 10, wobei die Gleitoberflächen (38, 39, 48, 49) in einem Winkel sind, als ein Ergebnis dessen die Kräfte, die von den Sperrzahnnocken in den Drehrichtungen aufeinander ausgeübt werden, Reaktionskräfte mit Komponenten erzeugen, die in der Radialrichtung des spiralförmigen Wegs (C) größer als die Komponenten in der Tangentialrichtung des spiralförmigen Wegs (C) sind.

12. Installationsdose (1) nach Anspruch 10 oder 11, wobei die Gleitoberflächen (38, 39, 48, 49) in einem Winkel zu dem spiralförmigen Weg (C) im Bereich von zehn bis vierzig Grad sind.

13. Installationsdose (1) nach einem der vorhergehenden Ansprüche 10 - 12, wobei die Normalvektoren der Gleitoberflächen (38, 39, 48, 49) in Bezug auf die Tangentenlinie zu dem spiralförmigen Weg (C) einen Winkel im Bereich von fünfzig bis achtzig Grad haben.

14. Installationsdose (1) nach einem der Ansprüche 11 - 13, wobei der kleinste Zwischenabstand zwischen zwei aufeinanderfolgenden Sperrzahnnocken (45) größer, vorzugsweise wenigstens fünf Mal größer als der kleinste Zwischenabstand zwischen zwei aufeinanderfolgenden ersten Sperrzahnnocken (32) ist.

## Revendications

1. Boîte d'installation (1) pour câblage électrique, comprenant un boîtier (2) et une bague (4) qui est réglable par rapport au boîtier, dans laquelle le boîtier est pourvu d'une paroi de fond (20) et d'une paroi circonférentielle cylindrique (21) qui se dresse depuis la paroi de fond et possède une ligne médiane (S), dans laquelle la paroi de fond et la paroi circonférentielle définissent conjointement un espace intérieur destiné à loger du matériel d'installation, dans laquelle la paroi circonférentielle comprend un bord circonférentiel circulaire (22) qui est tourné à l'opposé de la paroi de fond et délimite une ouverture primaire du boîtier, dans laquelle la bague (4) est pourvue d'un corps (40) de bague circulaire qui se situe de manière concentrique dans la paroi circonférentielle dans l'ouverture du boîtier, dans laquelle la bague (4), par le biais d'une transmission hélicoïdale (31, 44) le long d'un chemin hélicoïdal (C), entre en prise sur l'intérieur de la paroi circonférentielle (21), dans laquelle, par rapport au boîtier, la bague peut tourner autour de la ligne médiane (S) de la paroi circonférentielle dans une première direction de rotation et dans une seconde direction de rotation opposée, dans laquelle la transmission hélicoïdale (31, 44) est conçue pour, par tour dans la première direction de rotation, déplacer la bague parallèlement à la ligne médiane dans la direction de la paroi de fond jusqu'à une position basse et dans laquelle la transmission hélicoïdale (31, 44) est conçue pour, par tour de la bague dans la seconde direction de rotation, déplacer la bague parallèlement à la ligne médiane loin de la paroi de fond jusqu'à une position haute, **caractérisée en ce que** le boîtier (2) est pourvu d'une came de blocage (36) présentant une première surface de blocage (37) qui - lorsque la bague se trouve dans la position haute - est contiguë à la bague dans la direction de la première direction de rotation et bloque la bague par rapport à la première surface de blocage à l'encontre d'une rotation supplémentaire dans la seconde direction de rotation.

2. Boîte d'installation (1) selon la revendication 1, dans laquelle, à l'endroit de la contiguïté avec la bague (4), la première surface de blocage (37) se trouve inclinée à la suite de quoi une force que la bague exerce sur la première surface de blocage dans la seconde direction de rotation à l'endroit de la contiguïté génère une force de réaction de la première surface de blocage sur la bague, dont la composante dans la direction tangentielle du chemin hélicoïdal est plus grande que la composante dans la direction radiale du chemin hélicoïdal (C).

3. Boîte d'installation (1) selon la revendication 1 ou 2, dans laquelle, à l'endroit de la contiguïté avec la bague (4), la première surface de blocage (37) est inclinée par rapport au chemin hélicoïdal (C) selon un angle compris dans la plage de cinquante à quatre-vingt-dix degrés, dans laquelle, de préférence, à l'endroit de la contiguïté avec la bague (4) par rapport à la ligne tangente avec le chemin hélicoïdal (C), le vecteur normal de la première surface de blocage est incliné selon un angle compris dans la plage de zéro à quarante degrés, dans laquelle, de préférence, à l'endroit de sa contiguïté avec la bague, la première surface s'étend de manière sensiblement perpendiculaire à la seconde direction de rotation.

4. Boîte d'installation (1) selon l'une quelconque des revendications précédentes, dans laquelle, à l'endroit de la came de blocage (36), le boîtier (2) est pourvu d'une section (33) de paroi circonférentielle qui, par rapport au reste de la paroi circonférentielle (21), est capable de se déplacer vers l'extérieur, dans laquelle, de préférence, la section (33) de paroi circonférentielle est reliée au reste de la paroi circonférentielle par l'intermédiaire de connexions de pliage (34, 35), les connexions de pliage étant flexibles.

5. Boîte d'installation (1) selon la revendication 4, dans laquelle, sur le côté tourné à l'opposé de la première surface de blocage (37), la came de blocage (36) est pourvue d'une surface d'avancement (30), dans laquelle la surface d'avancement est inclinée à la suite de quoi une force, que la bague (4) exerce sur la surface d'avancement dans la première direction de rotation, génère une force de réaction, dont la composante dans la direction radiale du chemin hélicoïdal (C) est plus grande que la composante dans la direction tangentielle du chemin hélicoïdal (C).

6. Boîte d'installation (1) selon l'une quelconque des revendications précédentes, dans laquelle la bague (4) est pourvue d'une seconde surface de blocage (46) qui - lorsque la bague se trouve dans la position haute - est contiguë à la première surface de blocage (37) dans la direction de la seconde direction de rotation et bloque la bague par rapport à la première surface de blocage à l'encontre d'une rotation supplémentaire dans la seconde direction de rotation, dans laquelle, de préférence, à l'endroit de la contiguïté avec la première surface de blocage (37), la seconde surface de blocage (46) est inclinée à la suite de quoi une force, que la première surface de blocage (37) exerce sur la seconde surface de blocage (46) dans la première direction de rotation à l'endroit de la contiguïté, génère une force de réaction de la seconde surface de blocage sur la première surface de blocage, dont la composante dans la direction tangentielle du chemin hélicoïdal (C) est plus grande que la composante dans la direction radiale du chemin hélicoïdal (C).

7. Boîte d'installation (1) selon la revendication 6, dans laquelle, à l'endroit de la contiguïté avec la première surface de blocage (37), la seconde surface de blocage (46) est inclinée d'un angle par rapport au chemin hélicoïdal (C) compris dans la plage de cinquante à quatre-vingt-dix degrés, dans laquelle, de préférence, à l'endroit de la contiguïté avec la première surface de blocage (37) par rapport à la ligne tangente avec le chemin hélicoïdal (C), le vecteur normal de la seconde surface de blocage (46) est incliné d'un angle compris dans la plage de zéro à quarante degrés, dans laquelle, de préférence, la seconde surface de blocage (46) s'étend de manière sensiblement parallèle à la première surface de blocage (37).

8. Boîte d'installation (1) selon l'une quelconque des revendications précédentes, dans laquelle le boîtier (2) est pourvu d'un ou de plusieurs premiers éléments de guidage (31) qui s'étendent dans la direction circonférentielle de la paroi circonférentielle le long de l'intérieur de la paroi circonférentielle (21) et qui définissent conjointement un premier bord de guidage hélicoïdal, dans laquelle la bague (4) est pourvue d'un ou plusieurs seconds éléments de guidage (44) qui s'étendent dans la direction circonférentielle du corps (40) de bague le long de l'extérieur du corps de bague et définissent conjointement un second bord de guidage hélicoïdal dont la forme est complémentaire à celle du premier bord de guidage, dans laquelle, par le biais du chemin hélicoïdal (C), le second bord de guidage de la bague entre en prise sur le premier bord de guidage du boîtier afin de former la transmission hélicoïdale (31, 44) en coopération.

9. Boîte d'installation (1) selon l'une quelconque des revendications précédentes, dans laquelle, considérée parallèlement à la ligne médiane (S), la distance entre la première position et la seconde position de la bague est d'au moins cinq millimètres, de préférence d'au moins huit millimètres et idéalement d'approximativement dix millimètres.

10. Boîte d'installation (1) selon l'une quelconque des revendications précédentes, dans laquelle, sur l'intérieur de la paroi circonférentielle (21), le boîtier est pourvu de premières cames d'encliquetage (32), dans laquelle, sur l'extérieur du corps (40) de bague, la bague est pourvue de secondes cames d'encliquetage (45), dans laquelle les premières cames d'encliquetage (32) et les secondes cames d'encliquetage (45) entrent en contact mutuel lors de la rotation de la bague, dans laquelle, considérées dans les deux directions de rotation, les cames d'encliquetage sont des surfaces coulissantes (38, 39, 48, 49), dans laquelle les cames d'encliquetage sont conçues pour, à l'endroit des surfaces coulissantes, pouvoir coulisser l'une sur l'autre dans les deux directions de rotation.

11. Boîte d'installation (1) selon la revendication 10, dans laquelle les surfaces coulissantes (38, 39, 48, 49) sont inclinées, à la suite de quoi les forces exercées par les cames d'encliquetage les unes sur les autres dans les directions de rotation génèrent des forces de réaction dont les composantes dans la direction radiale du chemin hélicoïdal (C) sont plus grandes que les composantes dans la direction tangentielle du chemin hélicoïdal (C).

12. Boîte d'installation (1) selon la revendication 10 ou 11, dans laquelle les surfaces coulissantes (38, 39, 48, 49) sont inclinées par rapport au chemin hélicoïdal (C) selon un angle compris dans la plage de dix à quarante degrés.

13. Boîte d'installation (1) selon l'une quelconque des revendications 10 à 12, dans laquelle les vecteurs normaux des surfaces coulissantes (38, 39, 48, 49) par rapport à la ligne tangente au chemin hélicoïdal (C) sont inclinés d'un angle compris dans la plage de cinquante à quatre-vingt degrés.

14. Boîte d'installation (1) selon la revendication 11 à 13, dans laquelle la plus petite distance intermédiaire entre deux secondes cames d'encliquetage (45) successives est plus grande, de préférence au moins cinq fois plus grande que la plus petite distance intermédiaire entre deux premières cames d'encliquetage (32) successives.
